# EUROPÄISCHE PATENTANMELDUNG

(11) **EP 1 690 747 A2**
(43) Veröffentlichungstag der Anmeldung: **16.08.2006**
(21) Anmeldenummer: 05011454.5
(22) Anmeldetag: 27.05.2005
(51) Int. Cl.: B60R 19/48, B60R 9/06

(54) **Stossfänger für Kraftfahrzeuge**

(30) Priorität: 10.02.2005 DE 102005006113
(71) Anmelder: REHAU AG + Co, 95111 Rehau (DE)
(72) Erfinder: Peek, Bernd, 31712 Niedernwöhren (DE)

(57) **Zusammenfassung**

Stoßfänger (1) für Kraftfahrzeuge, mit einem Halteabschnitt für ein Kennzeichen (4), der durch Anbringen des Kennzeichens in seiner Gebrauchsstellung abdeckbar ist, dadurch gekennzeichnet, dass eine Einrichtung vorgesehen ist, durch die das Kennzeichen von seiner Gebrauchsstellung in eine zweite Stellung überührbar ist, in der der Halteabschnitt zumindest abschnittsweise freigegeben ist.

## Beschreibung

Die vorliegende Erfindung bezieht sich auf einen Stoßfänger für Kraftfahrzeuge, mit einem Halteabschnitt für ein Kennzeichen, der durch Anbringen des Kennzeichens in seiner Gebrauchsstellung abdeckbar ist.

Derartige Stoßfänger für Kraftfahrzeuge sind aus dem Stand der Technik allgemein bekannt. Sie bestehen überwiegend aus Kunststoff und sind entsprechend der Fahrzeuggeometrie geformt. Derartige Stoßfänger werden z.B. im Heckbereich eines Kraftfahrzeugs eingesetzt. Dort dienen sie auch gleichzeitig zur Aufnahme des amtlichen Kennzeichens des Kraftfahrzeugs. Zumeist ist der Bereich um das amtliche Kennzeichen, z.B. als Vertiefung, ausgeformt. Unabhängig von der Gestalt des Stoßfängers ist ein Halteabschnitt für das Kennzeichen vorgesehen, der durch Anbringen des Kennzeichens in seiner Gebrauchsstellung abgedeckt ist. Der Halteabschnitt ist dabei der Abschnitt des Stoßfängers, der sich in eingebautem Zustand des Stoßfängers hinter dem Kennzeichen befindet. Üblicherweise werden die Kennzeichen mit dem Stoßfänger, bzw. dem Halteabschnitt verschraubt.

In jüngerer Zeit werden verstärkt Fahrradträger nachgefragt, die im Heckbereich des Kraftfahrzeugs zu montieren sind. Derartige Fahrradträger werden bislang auf der Anhängerkupplung eines Kraftfahrzeugs montiert. Nachteilig dabei ist, dass das Kennzeichen des Kraftfahrzeugs durch diese Fahrradträger und die darauf montierten Fahrräder verdeckt wird. Aus diesem Grund verfügen die Fahrradträger über zusätzliche Kennzeichenhalter, in denen ein zusätzliches Kennzeichen des Kraftfahrzeugs anbringbar ist. Dadurch ist das Kennzeichen des Kraftfahrzeugs auch weiterhin lesbar. Als problematisch erweist es sich jedoch, dass das Anbringen dieser Fahrradträger vergleichsweise kompüziert ist. Insbesondere die auftretenden sehr hohen Kräfte verbieten es andererseits, den Fahrradträger direkt am Stoßfänger zu montieren, da dieser die entsprechenden Kräfte nicht aufnehmen könnte.

Aufgabe der Erfindung ist es daher, einen Stoßfänger der eingangs genannten Art bereitzustellen, mit dem es möglich ist, Kraftfahrzeuge einfach und kostengünstig zur Aufnahme von Fahrradträgern oder anderen gleichartigen Haltern vorzubereiten.

Die Aufgabe der Erfindung ist gelöst durch einen Stoßfänger der eingangs genannten Art, bei dem eine Einrichtung vorgesehen ist, durch die das Kennzeichen von seiner Gebrauchsstellung in eine zweite Stellung überführbar ist, in der der Halteabschnitt zumindest abschnittsweise frei gegeben ist.

Diese Lösung ist einfach und hat den Vorteil, dass es nunmehr möglich ist, im Bereich des Halteabschnitts Einrichtungen vorzusehen, die ein Anbringen von Fahrradträgern und dergleichen erlauben, ohne das optische Erscheinungsbild des Kraftfahrzeugs durch derartige vorbereitende Maßnahmen, wie z.B. Anhängerkupplung und dergleichen, zu stören.

In einer vorteilhaften Weiterbildung der Erfindung kann zum Überführen des Kennzeichens von seiner Gebrauchsstellung in die zweite Stellung das Kennzeichen schwenkbar sein. Ein derartiges Verschwenken lässt sich auf einfache Art und Weise technisch realisieren. Da das Kennzeichen bei einem montierten Fahrradträger ohnehin nicht sichtbar ist, ist es unproblematisch, das Kennzeichen in die zweite Stellung zu verschwenken. In dieser zweiten Stellung muss das Kennzeichen nicht mehr lesbar sein.

Von Vorteil kann es dabei sein, wenn im Bereich des Halteabschnitts wenigstens eine Aufnahme im Stoßfänger vorgesehen ist, die in der zweiten Stellung des Kennzeichens freigegeben ist. Bei dieser Aufnahme kann es sich z.B. um eine Steckdose handeln. Dadurch kann in einfacher Art und Weise die Stromversorgung des Fahrradträgers sichergestellt werden, und gleichzeitig ist in der Gebrauchsstellung des Kennzeichens die Steckdose vor Verschmutzung geschützt.

Von Vorteil kann es dabei sein, wenn im Bereich des Halteabschnitts wenigstens ein Durchbruch vorgesehen ist, der in der zweiten Stellung des Kennzeichens freigegeben ist. Über einen solchen Durchbruch kann z.B. ein Fahrradträger sich durch den Stoßfänger hindurch erstrecken und direkt mit dem Rahmen oder der Karosserie des Kraftfahrzeugs verbunden werden.

Insbesondere ist es möglich, wenn das Kennzeichen sich in der zweiten Stellung befindet, eine direkte Verbindung zwischen Fahrradträger und Kraftfahrzeug zu schaffen, die sich durch den Stoßfänger hindurch erstreckt, ohne dass bei abgenommenem Fahrradträger das Erscheinungsbild des Stoßfängers leidet, oder aber in unzulässiger Weise Kräfte in den Stoßfänger eingeleitet werden. Ein solcher Durchbruch hat auch den Vorteil, dass er nachträglich in einem Stoßfänger angebracht werden kann.

Eine besonders einfache Konstruktion lässt sich erzielen, wenn die Einrichtung zum Überführen des Kennzeichens von der Gebrauchsstellung in die zweite Stellung eine Klappe aufweist, an der das Kennzeichen montierbar ist.

Von Vorteil kann es dabei sein, wenn die Klappe eine Schwenkachse aufweist, die bei einem rechteckigen Kennzeichen quer zur längeren Seite verläuft. Bei dem montierten Stoßfänger bedeutet dies, dass die Schwenkachse im Wesentlichen senkrecht ist.

Wenn die Schwenkachse im Wesentlichen parallel zur längeren Seite verläuft, lässt sich das Kennzeichen sehr platzsparend verschwenken. Bei montiertem Stoßfänger verläuft dann die Schwenkachse im Wesentlichen horizontal. In der zweiten Stellung ragt das Kennzeichen weniger, nämlich nur entsprechend der Breite des Kennzeichens gegenüber dem Stoßfänger hervor.

Weiterhin kann es sich als günstig erweisen, wenn die Schwenkachse nahe dem Rand des Kennzeichens angeordnet ist. Auch dadurch lässt sich die Konstruktion vereinfachen. Bei montiertem Stoßfänger kann die Schwenkachse dabei am unteren Rand und am oberen Rand, ebenso wie am rechten oder linken Rand, angeordnet sein, je nach Geometrie des Stoßfängers.

Bei einer alternativen Ausführungsform kann die Einrichtung zum Überführen des Kennzeichens von der Gebrauchsstellung in die zweite Stellung eine Führungseinrichtung aufweisen, entlang der das Kennzeichen verschieblich ist. Eine solche Ausführungsform hat den Vorteil, dass das Kennzeichen in der zweiten Stellung gegenüber dem Stoßfänger nicht vorsteht.

In einer weiteren vorteilhaften Ausgestaltung der Erfindung kann die Einrichtung zum Überführen des Kennzeichens von der Gebrauchsstellung in die zweite Stellung eine Vorspanneinrichtung aufweisen, mit der das Kennzeichen in die Gebrauchsstellung vorgespannt ist. Dadurch kann die Bedienung erleichtert werden.

Darüber hinaus kann auch eine Verriegelungseinrichtung vorgesehen sein, durch die das Kennzeichen in der Gebrauchsstellung lösbar verriegelbar ist.

Weiterhin wird ein Kraftfahrzeug mit einem Stoßfänger nach einem der vorangegangenen Ansprüche beansprucht.

In einer vorteilhaften Weiterbildung kann das Kraftfahrzeug mit einer Halteeinrichtung für einen Fahrradträger versehen sein, der in der Gebrauchsstellung das Kennzeichen verdeckt und in der zweiten Stellung zugänglich ist.

Von Vorteil kann es dabei sein, dass sich der Fahrradträger durch den Durchbruch im Stoßfänger erstreckt. Auf diese Weise ist es möglich, dass der Fahrradträger keine Kräfte in den Stoßfänger selbst einleitet.

### Es zeigen:

- Fig. 1: den erfindungsgemäßen Stoßfänger mit dem Kennzeichen in seiner Gebrauchsstellung;
- Fig. 2: den Stoßfänger aus Fig. 1 mit dem Kennzeichen in der zweiten Stellung;
- Fig. 3: eine abschnittsweise dargestellte Seitenansicht eines Kraftfahrzeugs mit erfindungsgemäßem Stoßfänger und abschnittsweise dargestelltem Fahrradträger;
- Fig. 4: den Stoßfänger aus Fig. 1 in einer Schnittansicht entlang der Linie IV-IV und
- Fig. 5: den Stoßfänger aus Fig. 2 in einer Schnittansicht entlang der Linie V-V.

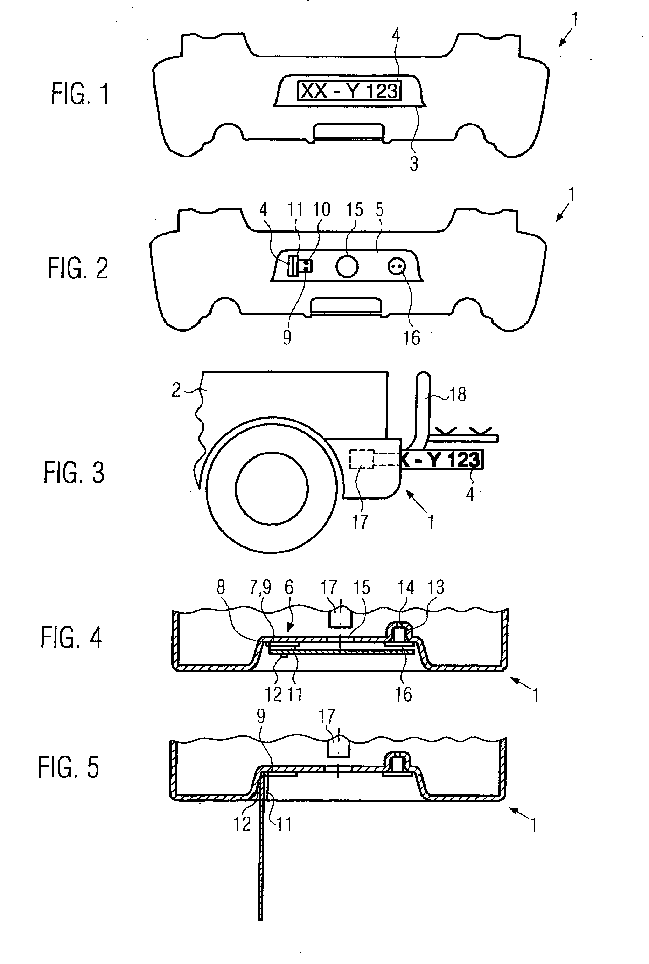

Fig. 1 zeigt den erfindungsgemäßen Stoßfänger 1. Der Stoßfänger besteht aus Kunststoff und ist entsprechend der Geometrie eines Kraftfahrzeugs gestaltet. Er ist als Stoßfänger für das Heck eines Kraftfahrzeugs vorgesehen und bildet im Wesentlichen den unteren Teil des Hecks des Kraftfahrzeugs. Das Kraftfahrzeug 2 ist ausschnittsweise in Fig. 3 in einer Seitenansicht dargestellt.

Der Stoßfänger verfügt über einen ausgeformten Aufnahmebereich 3, in dem ein Kennzeichen 4 in einem Halteabschnitt 5 des Aufnahmebereichs 3, bzw. des Stoßfängers 1, angeordnet ist. Der Halteabschnitt 5 wird durch das Kennzeichen 4 in der in Fig. 1 dargestellten Gebrauchsstellung verdeckt. In der Gebrauchsstellung ist das Kennzeichen bei am Kraftfahrzeug montiertem Stoßfänger in bekannter Weise lesbar.

Durch eine Einrichtung 6 zum Überführen des Kennzeichens von der Gebrauchsstellung in eine zweite Stellung, die in Fig. 2 dargestellt ist, kann das Kennzeichen 4 verschwenkt werden, so dass der Halteabschnitt 5 zumindest abschnittsweise nicht mehr verdeckt ist. Die Einrichtung 6 verfügt dabei über eine Klappe 7 mit einem eine Schwenkachse bildenden Scharnier 8 und einem Fußabschnitt 9, der mit dem Stoßfänger über Schrauben 10 verschraubt ist. Ein entgegen über dem Fußabschnitt 9 verschwenkbarer Befestigungsabschnitt 11 der Klappe 7 ist für das Befestigen des Kennzeichens 4 vorgesehen. Die Befestigung des Kennzeichens an dem Befestigungsabschnitt 11 erfolgt wiederum durch Schrauben 12. In Fig. 4 ist das Kennzeichen 4 mit der Klappe 7 in der Gebrauchsstellung in einer Schnittansicht dargestellt und in Fig. 5 in der zweiten Stellung, in der das Kennzeichen gegenüber dem Stoßfänger 1 und dem Halteabschnitt 5 verschwenkt ist.

Im Halteabschnitt 5 verfügt der Stoßfänger darüber hinaus über eine Aufnahme 13 mit einer Durchgangsöffnung 14 und über einen Durchbruch 15. Die Aufnahme und der Durchbruch sind in der Gebrauchsstellung des Kennzeichens nicht sichtbar.

Die Aufnahme 13 dient zur Aufnahme einer Steckdose 16, wobei die Durchgangsöffnung 14 dafür vorgesehen ist, ein Kabel vom Kraftfahrzeug zur Steckdose zu führen. Der Durchbruch 15 dient dazu, eine Trägereinrichtung, wie z. B. einen Fahrradträger durch den Stoßfänger 1 hindurch zu stecken. Der Fahrradträger oder dergleichen wird dann über eine Halteeinrichtung 17 direkt mit dem Rahmen oder der Karosserie des Kraftfahrzeugs verbunden. Hierzu kann eine nicht dargestellte Steckaufnahme oder Verschraubung vorgesehen sein.

Die Halteeinrichtung 17 am Kraftfahrzeug ist schematisch in Fig. 3 dargestellt. Dort ist erkennbar, wie sich der Fahrradträger über den Durchbruch 15 durch den Stoßfänger hindurch erstreckt und mit dem Rahmen des Kraftfahrzeugs direkt verbunden ist.

Nachfolgend wird die Wirkungs- und Funktionsweise der Erfindung näher erläutert.

Bei normalem Gebrauch des Kraftfahrzeugs befindet sich das Kennzeichen 4 in der Gebrauchsstellung. Es ist dann wie bei Kraftfahrzeugen üblich lesbar, da es sich im Aufnahmebereich 3 des Stoßfängers 1 befindet. Durch das Kennzeichen 4 wird der Halteabschnitt 5 verdeckt. Beabsichtigt der Besitzer des Kraftfahrzeugs nunmehr z.B. einen Fahrradträger am Kraftfahrzeug anzubringen, so überführt er das Kennzeichen von der Gebrauchsstellung in die zweite Stellung, so dass der Durchbruch 15 und die Steckdose 16 frei zugänglich sind. Der Benutzer kann nunmehr den Fahrradträger durch den Durchbruch 15 hindurch stecken und mit der Halteeinrichtung 17 des Kraftfahrzeugs verbinden. Zusätzlich kann er über die Steckdose den Fahrradträger mit Strom versorgen, um z.B. die Beleuchtung zu betreiben.

Es ist somit nicht mehr erforderlich, zusätzlich am Kraftfahrzeug eine Kupplung anzubringen, um das Anbringen eines Fahrradträgers zu ermöglichen. Statt dessen kann der Fahrradträger nunmehr direkt mit dem Kraftfahrzeug verbunden werden, ohne aber den Stoßfänger zu belasten. Darüber hinaus eignet sich diese Lösung auch zum Nachrüsten an Pkws, da der optische Gesamteindruck des Kraftfahrzeugs in keiner Weise beeinträchtigt wird. Wenn der Fahrradträger wieder entfernt wird, kann das Kennzeichen von der zweiten Stellung in die Gebrauchsstellung rücküberführt werden. Zur Unterstützung kann das Kennzeichen 4, bzw. die Klappe 7 in die Gebrauchsstellung über einen nicht dargestellten Federmechanismus vorgespannt sein. Ebenso kann aus Sicherheitsgründen zusätzlich eine Verriegelungseinrichtung vorgesehen sein, mit der die Klappe 7, bzw. das Kennzeichen 4, in der Gebrauchsstellung gesichert werden kann.

### BEZUGSZEICHENLISTE

- 1: Stoßfänger
- 2: Kraftfahrzeug
- 3: Aufnahmebereich
- 4: Kennzeichen
- 5: Halteabschnitt
- 6: Einrichtung
- 7: Klappe
- 8: Scharnier
- 9: Fußabschnitt
- 10: Schrauben
- 11: Halteabschnitt
- 12: Schraube
- 13: Aufnahme
- 14: Durchgangsöffnung
- 15: Durchbruch
- 16: Steckdose
- 17: Halteeinrichtung

## Patentansprüche

1. Stoßfänger für Kraftfahrzeuge mit einem Halteabschnitt (5) für ein Kennzeichen (4), der durch Anbringen des Kennzeichens in seiner Gebrauchsstellung abdeckbar ist, **dadurch gekennzeichnet, dass** eine Einrichtung (6) vorgesehen ist, durch die das Kennzeichen von seiner Gebrauchsstellung in eine zweite Stellung überführbar ist, in der der Halteabschnitt (5) zumindest abschnittsweise freigegeben ist.

2. Stoßfänger nach Anspruch 1, **dadurch gekennzeichnet, dass** zum Überführen des Kennzeichens von seiner Gebrauchsstellung in die zweite Stellung das Kennzeichen verschwenkbar ist.

3. Stoßfänger nach Anspruch 1 oder 2, **dadurch gekennzeichnet, dass** im Bereich des Halteabschnitts zumindest eine Aufnahme (13) im Stoßfänger (1) vorgesehen ist, die in der zweiten Stellung des Kennzeichens freigegeben ist.

4. Stoßfänger nach einem der vorangegangenen Ansprüche, **dadurch gekennzeichnet, dass** in der Aufnahme (13) eine Steckdose (16) angeordnet ist.

5. Stoßfänger nach einem der vorangegangenen Ansprüche, **dadurch gekennzeichnet, dass** im Bereich des Halteabschnifts wenigstens ein Durchbruch (15) vorgesehen ist, der in der zweiten Stellung des Kennzeichens freigegeben ist.

6. Stoßfänger nach einem der vorangegangenen Ansprüche, **dadurch gekennzeichnet, dass** die Einrichtung zum Überführen des Kennzeichens von der Gebrauchsstellung in die zweite Stellung eine Klappe (7) aufweist, an der das Kennzeichen montierbar ist.

7. Stoßfänger nach einem der vorangegangenen Ansprüche, **dadurch gekennzeichnet, dass** die Klappe (7) eine Schwenkachse aufweist, die bei einem rechteckigen Kennzeichen quer zur längeren Seite verläuft.

8. Stoßfänger nach einem der vorangegangenen Ansprüche, **dadurch gekennzeichnet, dass** die Klappe eine Schwenkachse aufweist, die bei einem rechteckigen Kennzeichen parallel zur längeren Seite verläuft.

9. Stoßfänger nach einem der vorangegangenen Ansprüche, **dadurch gekennzeichnet, dass** die Schwenkachse nahe dem Rand des Kennzeichens angeordnet ist.

10. Stoßfänger nach einem der vorangegangenen Ansprüche, **dadurch gekennzeichnet, dass** die Einrichtung zum Überführen des Kennzeichens von der Gebrauchsstellung in die zweite Stellung wenigstens einen Führungsabschnitt aufweist, entlang dem das Kennzeichen verschieblich ist.

11. Stoßfänger nach einem der vorangegangenen Ansprüche, **dadurch gekennzeichnet, dass** die Einrichtung zum Überführen des Kennzeichens von der Gebrauchsstellung in die zweite Stellung eine Vorspanneinrichtung aufweist, mit der das Kennzeichen in die Gebrauchsstellung vorgespannt ist.

12. Stoßfänger nach einem der vorangegangenen Ansprüche, **dadurch gekennzeichnet, dass** eine Verriegelungseinrichtung vorgesehen ist, durch die das Kennzeichen in der Gebrauchsstellung lösbar verriegelbar ist.

13. Kraftfahrzeug mit einem Stoßfänger nach einem der vorangegangenen Ansprüche.

14. Kraftfahrzeug nach Anspruch 13, **dadurch gekennzeichnet, dass** das Kraftfahrzeug mit einer Halteeinrichtung, vorzugsweise für einen Fahrradträger, versehen ist, wobei die Halteeinrichtung in der Gebrauchsstellung des Kennzeichens verdeckt und in der zweiten Stellung zugänglich ist.

15. Kraftfahrzeug nach Anspruch 13 oder 14, **dadurch gekennzeichnet, dass** sich der Fahrradhalter durch den Durchbruch im Stoßfänger erstreckt.
